(19) Europäisches Patentamt / European Patent Office / Office européen des brevets

(11) **EP 2 822 800 B1**

(12) **FASCICULE DE BREVET EUROPEEN**

(45) Date de publication et mention
de la délivrance du brevet:
**01.01.2020  Bulletin 2020/01**

(21) Numéro de dépôt: **13712307.1**

(22) Date de dépôt: **04.03.2013**

(51) Int Cl.:
*H02J 7/00* (2006.01)   *H02J 7/34* (2006.01)
*B60L 3/04* (2006.01)   *B60L 53/16* (2019.01)
*B60L 58/10* (2019.01)  *B60L 15/00* (2006.01)

(86) Numéro de dépôt international:
**PCT/FR2013/050450**

(87) Numéro de publication internationale:
**WO 2013/132181 (12.09.2013 Gazette 2013/37)**

(54) **PROCEDE DE DECHARGE D'AU MOINS UN CONDENSATEUR D'UN CIRCUIT ELECTRIQUE**

VERFAHREN ZUM ENTLADEN MINDESTENS EINES KONDENSATORS EINES ELEKTRISCHEN
SCHALTKREISES

METHOD FOR DISCHARGING AT LEAST ONE CAPACITOR OF AN ELECTRIC CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.03.2012  FR 1252129**

(43) Date de publication de la demande:
**14.01.2015  Bulletin 2015/03**

(73) Titulaire: **Valeo Systèmes de Contrôle Moteur
95800 Cergy (FR)**

(72) Inventeur: **BRUYERE, Antoine
F-78700 Evequemont (FR)**

(74) Mandataire: **Argyma
36, rue d'Alsace Lorraine
31000 Toulouse (FR)**

(56) Documents cités:
**EP-A1- 2 407 339     US-A1- 2011 050 136**

• **LUIS DE SOUSA ET AL: "A combined multiphase
electric drive and fast battery charger for Electric
Vehicles", VEHICLE POWER AND PROPULSION
CONFERENCE (VPPC), 2010 IEEE, IEEE, 1
septembre 2010 (2010-09-01), pages 1-6,
XP031929193, DOI: 10.1109/VPPC.2010.5729057
ISBN: 978-1-4244-8220-7**

## Description

La présente invention concerne la décharge d'au moins un condensateur d'un circuit électrique comprenant un enroulement électrique de stator de machine électrique tournante, et notamment embarqué sur un véhicule hybride ou électrique pour propulser ce dernier.

Cette décharge de condensateur(s) peut être souhaitable à l'issue de la charge par un réseau électrique externe d'une unité de stockage d'énergie électrique du circuit électrique ou à l'issue d'une séquence lors de laquelle le véhicule est propulsé en tout ou partie par la machine électrique tournante. Des exemples de cas dans lesquels il peut être avantageux de décharger le ou les condensateurs sont mentionnés dans la norme EN 50178 de 1997 : « Equipement électronique utilisé dans des installations de puissance ».

La tension aux bornes de ce condensateur peut être visible sur des bornes accessibles du circuit électrique depuis l'extérieur et l'existence de cette tension peut être dangereuse pour un opérateur tel qu'un garagiste, par exemple. Il est connu de décharger un ou plusieurs condensateurs à l'aide de résistance(s) de décharge connectée(s) au circuit électrique et dédiées à l'opération de décharge. Cette solution augmente le nombre de composants du circuit électrique et elle est ainsi coûteuse.

Il est également connu de décharger le ou les condensateurs dans l'enroulement électrique de stator. Cette solution est à l'heure actuelle relativement complexe à mettre en œuvre car il faut éviter que le courant de décharge ne crée un couple moteur non souhaité.

La demande US 2011/0050136 enseigne de décharger un condensateur d'un circuit électrique comprenant une batterie et un enroulement électrique de stator dont les bobines sont couplées en étoile. Lors de la décharge, le courant issu du condensateur traverse une branche additionnelle comprenant une résistance facilitant la décharge avant de parcourir l'enroulement électrique de stator.

Il existe un besoin pour décharger de façon simple, peu coûteuse et efficace le ou les condensateurs d'un circuit électrique comprenant un enroulement électrique de stator de machine électrique tournante, ledit circuit étant notamment un circuit de traction d'un véhicule hybride ou électrique.

L'invention a pour but de répondre à ce besoin et elle y parvient à l'aide d'un procédé de décharge d'au moins un condensateur d'un circuit électrique comprenant en outre:

- un enroulement électrique de stator de machine électrique tournante polyphasée, ledit enroulement comprenant une pluralité de bobines formant chacune une phase du stator et étant électriquement non couplées entre elles,
- un système de commutation comprenant une pluralité de cellules de commutation commandables,

procédé dans lequel on alimente électriquement l'enroulement électrique de stator par le condensateur à travers le système de commutation, les cellules de commutation étant commandées de manière à ce que l'enroulement électrique de stator soit parcouru par le courant électrique homopolaire.

Le procédé ci-dessus consiste à commander les interrupteurs électroniques du système de commutation interposé entre le ou les condensateurs et l'enroulement électrique de stator de manière à ce que le courant de décharge de ce ou ces condensateurs soit transformé par le système de commutation en courant homopolaire.

Lorsque l'enroulement électrique de stator comprend N bobines, le courant homopolaire $i_{M0}$ est défini comme suit :

$$i_{M0} = \frac{\sum\limits_{j=1}^{N} i_j}{N}$$

Selon le procédé ci-dessus, la commande du système de commutation permet que chaque bobine soit parcourue par un courant non nul de valeur $i_{M0}$ lorsque l'on décharge le ou les condensateurs. Chaque bobine peut être uniquement parcourue par le courant homopolaire $i_{M0}$ lors de cette décharge du ou des condensateurs.

Lorsque les cellules de commutation du système de commutation sont commandées selon une même période de commutation, les bobines sont chacune parcourues par un courant électrique propre de même valeur moyenne, sur ladite période de commutation. Dans le cas d'un enroulement électrique de stator à trois phases u, v et w, chaque phase étant respectivement parcourue par un courant électrique propre $i_u$, $i_v$ et $i_w$, la commande du système de commutation permet que $i_u$, $i_v$ et $i_w$ soient tous égaux à $i_{M0}$, à l'exception des instants lors desquels une commutation se produit dans le système de commutation.

Selon le procédé ci-dessus, l'enroulement électrique de stator est électriquement alimenté par des courants qui créent chacun un champ tournant et la combinaison de ces champs ne crée pas de champ tournant global dans l'entrefer de la machine, de sorte qu'aucun couple n'est exercé sur le rotor de celle-ci.

La machine électrique tournante peut être une machine configurée pour que la force électromotrice induite dans chaque phase du stator soit sinusoïdale ou ne comporte pas d'harmonique de rang 3 ou de rang multiple de 3 lorsque l'enroulement électrique de stator est parcouru par le courant homopolaire. Dans ce cas, aucun couple n'est appliqué au rotor On peut ainsi décharger le ou les condensateurs, afin par exemple de satisfaire des exigences de la norme EN 50178 ci-dessus sans mettre en mouvement le rotor.

En variante, le procédé peut être appliqué à des machines électriques tournantes pour lesquelles un faible couple est appliqué au rotor lorsque le stator est alimenté en courant homopolaire.

Chaque bobine de l'enroulement électrique de stator peut avoir à ses bornes une tension égale en valeur moyenne d'une bobine à l'autre.

Les bobines ne sont pas couplées entre elles, c'est-à-dire qu'aucune bobine de l'enroulement électrique de stator n'a de borne reliée directement à une borne d'une autre bobine de l'enroulement électrique de stator. « Les bobines ne sont pas électriquement couplées entre elles » est synonyme de « les bobines sont indépendantes »

Le stator peut être triphasé, auquel cas l'enroulement électrique de stator est formé par trois bobines.

Les bobines du circuit électrique de stator peuvent n'être ni couplées en étoile, ni couplées en polygonal, c'est-à-dire en triangle lorsque l'enroulement électrique de stator est triphasé.

Les cellules de commutation peuvent être commandées de manière à ce que la valeur moyenne sur la période de commutation des cellules de commutation de la somme des courants alimentant chacun une des bobines de l'enroulement électrique soit égale à une valeur prédéfinie non nulle. Dans le cas triphasé, la somme des trois courants qui parcourent chacun une des bobines du stator est ainsi égale à ladite valeur prédéfinie. Autrement dit, la commande du système de commutation peut permettre de réguler la valeur moyenne, sur une période de commutation, du courant homopolaire autour d'une valeur donnée non nulle.

Ladite valeur prédéfinie peut être choisie en fonction du pourcentage de décharge du condensateur que l'on souhaite obtenir à partir de la charge (en Coulomb) accumulée entre les armatures du condensateur avant la mise en œuvre du procédé, encore appelée « charge initiale » par la suite. Le procédé permet par exemple que le condensateur soit déchargé d'au moins 80 % de la charge initiale.

La valeur prédéfinie de ladite valeur moyenne peut également être choisie pour que le procédé de décharge ait une durée inférieure ou égale à une valeur seuil, de manière à respecter des contraintes données.

Dans un exemple de mise en œuvre de l'invention, le système de commutation comprend une pluralité de bras montés en parallèle, chaque bras comprenant deux cellules de commutation commandables séparées par un point milieu, chaque bobine étant disposée entre les points milieux de deux bras dédiés à ladite bobine et le condensateur étant monté en parallèle desdits bras.

Le circuit peut comporter une unité de stockage d'énergie électrique, le condensateur étant monté entre l'unité de stockage d'énergie électrique et le système de commutation.

Le condensateur peut être connecté à l'enroulement électrique de stator uniquement par l'intermédiaire du système de commutation, notamment uniquement par l'intermédiaire des bras montés en parallèle.

Lors de la décharge, le courant issu du condensateur peut directement circuler dans le système de commutation et dans l'enroulement électrique de stator. La décharge peut ainsi ne pas impliquer que ce courant circule dans une résistance additionnelle. « Directement » signifie ici « sans parcourir un composant électrique qui soit autre que des conducteurs électriques ».

Le circuit électrique peut comprendre un convertisseur de tension continu/continu interposé entre l'unité de stockage d'énergie électrique et le système de commutation.

Le condensateur peut être disposé entre l'unité de stockage d'énergie électrique et le convertisseur de tension continu/continu ou entre le système de commutation et le convertisseur de tension continu/continu. En variante, le circuit électrique peut comprendre :

- un condensateur disposé entre l'unité de stockage d'énergie électrique et le convertisseur de tension continu/continu et,
- un condensateur disposé entre le système de commutation et le convertisseur de tension continu/continu

et,

lorsque l'on met en œuvre le procédé, on peut décharger l'un et/ou l'autre de ces condensateurs.

L'unité de stockage d'énergie électrique peut être une batterie, un super-condensateur ou tout assemblage de batteries ou de super-condensateurs. Il s'agit par exemple de plusieurs branches en parallèle de batteries en série. L'unité de stockage d'énergie électrique peut avoir une tension nominale comprise entre 60 V et 400 V, notamment entre 200 V et 400 V.

Le circuit peut comprendre un connecteur apte à être branché à un connecteur de type complémentaire d'un réseau électrique pour charger l'unité de stockage d'énergie électrique, le connecteur comprenant au moins une pluralité de contacts ayant chacun une extrémité libre et une autre extrémité reliée à un point intermédiaire d'une bobine. Le réseau électrique alimente ainsi chaque bobine via un point intermédiaire de celle-ci, notamment un point milieu de celle-ci.

Un tel circuit électrique peut être à la fois utilisé pour :

- alimenter les bobines du stator depuis l'unité de stockage d'énergie électrique et à travers le système de commutation utilisé en onduleur pour faire tourner la machine électrique, et
- charger l'unité de stockage d'énergie électrique à travers les bobines du stator utilisées comme inductances et à travers le système de commutation utilisé comme redresseur.

La structure du circuit et la commande des cellules de commutation du système de commutation peuvent permettre la charge de l'unité de stockage d'énergie électrique sans mise en mouvement du rotor.

Le réseau peut délivrer l'une quelconque d'une grandeur électrique d'alimentation alternative et d'une grandeur électrique d'alimentation continue. En particulier, la commande des cellules de commutation peut être effectuée comme décrit dans la demande déposée en France le 21 décembre 2011 sous le numéro 11 62140 par la Déposante.

Un tel circuit électrique peut ainsi être branché à tout type de réseau, à savoir aussi bien un réseau polyphasé ou monophasé délivrant une tension alternative qu'à un réseau délivrant une tension continue ou un courant continu.

Le circuit électrique est notamment embarqué sur un véhicule électrique ou hybride, c'est-à-dire un véhicule dont la traction peut être effectuée exclusivement ou en partie seulement à l'aide de la machine électrique tournante.

Le condensateur a par exemple une capacité comprise entre 100 μF et 5000 μF.

La machine électrique tournante a par exemple une puissance nominale comprise entre ... et 3 kW et 200 kW L'invention pourra être mieux comprise à la lecture qui va être faite d'un exemple non limitatif de mise en œuvre de celle-ci et à l'examen du dessin annexé sur lequel :

- la figure 1 représente un circuit électrique comprenant un condensateur à décharger,
- la figure 2 représente de façon schématique un véhicule auquel le circuit électrique de la figure 1 peut être intégré, et

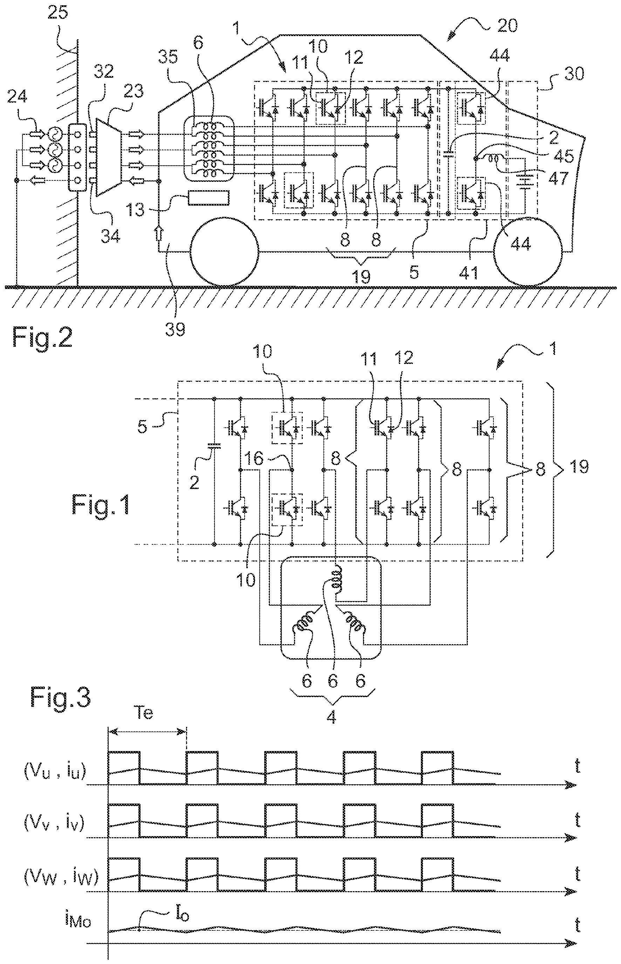

- la figure 3 illustre les tensions et les courants propres à chaque bobine de l'enroulement électrique de stator représenté sur les figures 1 et 2 lorsque le procédé selon l'invention est mis en oeuvre. On a représenté sur la figure 1 un circuit électrique 1 comprenant un condensateur 2 que l'on cherche à décharger. Le condensateur 2 présente par exemple une capacité comprise entre 100 μF et 5000 μF. Avant la mise en œuvre du procédé, la charge accumulée entre les armatures du condensateur 2 est par exemple comprise entre 20 % et 100 % de sa charge maximale, tel qu'une tension supérieure à par exemple 60 V puisse apparaître aux bornes du condensateur.

Le circuit électrique 1 comprend en outre un enroulement électrique de stator 4 et un système de commutation 5 interposé entre le condensateur 2 et l'enroulement électrique de stator 4. Dans l'exemple considéré, le stator est triphasé, étant par exemple un stator de moteur synchrone, notamment à rotor à aimants permanents. En variante, le stator peut comporter plus de trois phases.

Dans d'autres variantes, le stator peut être un stator de machine à réluctance variable ou de machine asynchrone.

Le stator peut faire partie d'une machine électrique tournante configurée pour que la force électromotrice induite dans chaque phase du stator soit sinusoïdale ou ne comprenne pas d'harmonique de rang 3 ou de rang multiple de 3 lorsque le stator est alimenté en courant homopolaire.

L'enroulement électrique de stator 4 est dans l'exemple considéré formé par trois bobines 6 définissant chacune une des phases électriques u, v et w du stator. Dans ce qui suit, $v_u$ et $i_u$ désignent respectivement la tension aux bornes de la bobine définissant la phase u et le courant parcourant celle-ci, $v_v$ et $i_v$ désignent respectivement la tension aux bornes de la bobine définissant la phase v et le courant parcourant celle-ci et $v_w$ et $i_w$ désignent respectivement la tension aux bornes de la bobine définissant la phase w et le courant parcourant celle-ci.

La tension homopolaire est définie par $u_{M0} = (u_U + u_V + u_W)/3$ et le courant homopolaire est défini par $i_{M0} = (i_U + i_V + i_W)/3$.

Dans l'exemple représenté, le système de commutation 5 comprend une pluralité de bras 8, chaque bras étant monté en parallèle du condensateur 2. Chaque bras 8 comprend dans l'exemple représenté deux cellules de commutation 10 commandables. Chaque cellule de commutation 10 est par exemple formée par un interrupteur commandable 11 en antiparallèle duquel est montée une diode 12. L'interrupteur 11 peut être un transistor, notamment un transistor à effet de champ, bipolaire ou de type IGBT.

Une unité de commande centralisée 13 comprenant des moyens de traitement numérique peut piloter l'ensemble des transistors 11.

Chaque bras 8 comprend un point milieu 16 entre les deux cellules de commutation 10 et chaque point milieu 16 d'un bras 8 est dans l'exemple décrit relié à une borne d'une des bobines 6. Chaque bobine 6 peut ainsi être disposée entre deux points milieu 16 de deux bras distincts, ces deux bras 8 formant alors un pont en H 19. Chaque pont en H 19 peut être dédié à une bobine spécifique 6 de l'enroulement électrique de stator 4.

Comme on peut le voir, les bobines 6 ne sont pas couplées entre elles. En effet, dans l'exemple de la figure 1, chaque bobine 6 a ses bornes directement reliées à d'autres éléments, ici à des cellules de commutation 10, qu'à des bornes des autres bobines 6, contrairement à ce qui serait le cas si l'enroulement électrique de stator 4 était connecté en étoile ou en triangle.

Le circuit électrique 1 décrit en référence à la figure 1 peut être intégré au système de charge et de traction d'un véhicule 20 qui est par exemple une automobile à propulsion hybride ou exclusivement électrique.

Le circuit 1 peut alors, comme représenté sur la figure 2, comprendre :

- un connecteur 23 destiné à être branché à un réseau électrique 24 via un connecteur d'un moyen de charge en énergie électrique 25, et

- une unité de stockage d'énergie électrique 30. L'unité de stockage d'énergie électrique 30 peut être une batterie ou une association en parallèle et/ou en série de batteries.

Le réseau électrique 24 est dans cet exemple un réseau triphasé mais l'invention s'applique à des réseaux polyphasés autres que triphasés ou à des réseaux monophasés. Il s'agit par exemple d'un réseau industriel géré par un opérateur et déployé à une échelle régionale, nationale ou internationale. Le réseau délivre par exemple une tension de fréquence égale à 50 Hz ou 60 Hz.

Dans l'exemple de la figure 2, le connecteur 23 comprend quatre contacts. Trois contacts principaux 32 présentent chacun une extrémité libre destinée à être branchée au contact de type complémentaire du connecteur du moyen de charge 25. Le quatrième contact 34 du connecteur 23 est relié à la carrosserie 39 du véhicule 1 et destiné à être branché à la terre du réseau électrique 24.

Comme on peut le voir, chaque contact principal 32 peut avoir une autre extrémité reliée à une bobine 6. Dans l'exemple de la figure 2, cette extrémité est reliée à un point milieu 35 d'une bobine 6, c'est-à-dire que la liaison avec le contact 32 sépare la bobine 6 en un nombre exactement égal de spires.

Chacune des bobines 6 est ainsi partagée en deux demi-bobines parcourues par des courants opposés d'une demi-bobine à l'autre lorsque du courant va du réseau électrique 24 vers l'unité de stockage d'énergie électrique 30 via le système de commutation 5 et les bobines 6.

Le circuit 1 comprend encore dans l'exemple considéré un convertisseur de tension continu/continu 41. Le condensateur 2 est interposé entre le système de commutation 5 et le convertisseur de tension continu/continu 41 dont il forme une entrée. L'unité de stockage d'énergie électrique 30 est montée en sortie du convertisseur 41.

Le convertisseur 41 est dans l'exemple représenté un hacheur série délivrant à l'unité de stockage d'énergie électrique 30 une tension de sortie obtenue par dévoltage de la tension d'entrée aux bornes de chaque bras 8. De façon connue, ce hacheur série 41 comprend deux cellules de commutation 44, identiques ou non aux cellules de commutation 10 du système de commutation 5 et séparées par un point médian 45. Les cellules 44 peuvent être pilotées par l'unité de commande 13. Chacune de ces cellules 44 est dans l'exemple considéré réversible, comprenant en antiparallèle un interrupteur commandable et une diode. Une inductance 47 est interposée entre ce point médian 45 et l'unité de stockage d'énergie électrique 30.

L'unité de commande 13 peut être configurée pour commander les interrupteurs des cellules de commutation 10 et 44 ci-dessus en ouverture et en fermeture de manière à ce que :

- l'unité de stockage d'énergie électrique 30 soit chargée par le réseau électrique 24 auquel est branché le connecteur 23 selon un mode de fonctionnement, et
- l'unité de stockage d'énergie électrique 30 alimente les bobines 6 de l'enroulement électrique de stator 4 de manière à générer un couple moteur entraînant le véhicule 20 selon un autre mode de fonctionnement.

En particulier, le connecteur 23 et la commande des cellules de commutations 10 et/ou 44 peuvent être tels qu'exposé dans la demande déposée en France le 21 décembre 2011 sous le numéro 11 62140 par la Déposante pour permettre la charge de l'unité de stockage d'énergie électrique 30 depuis tout type de réseau électrique 24.

Par exemple à l'issue de la charge de l'unité de stockage d'énergie électrique 30 par le réseau 24 ou à l'issue d'une séquence lors de laquelle la machine électrique tournante entraîne le véhicule 20, il peut être souhaitable de décharger le condensateur 2 aux bornes duquel une tension trop importante existe. Pour ce faire, on peut commander les cellules de commutation 10 de manière à ce que la charge initiale du condensateur 2 soit dissipée dans l'enroulement électrique de stator 4. Dans l'exemple de la figure 2, les cellules de commutation 44 sont également commandées de manière à mettre l'unité de stockage d'énergie 30 en circuit ouvert.

Lors de cette étape, les cellules de commutation 10 sont commandées de manière à ce que chaque bobine soit parcourue en même temps par un courant de même valeur, comme représenté sur la figure 3. Sur la figure 3, on peut voir que l'enroulement électrique de stator 4 est alimenté par le courant homopolaire et que la tension aux bornes de chaque bobine 6 est égale.

La commande des cellules de commutation 10 peut être effectuée de manière à ce que valeur moyenne du courant dans chaque bobine prenne une valeur non nulle prédéfinie $I_0$, cette commande permettant qu'aucun couple ne soit appliqué au rotor malgré l'alimentation électrique par le condensateur 2 de l'enroulement électrique de stator 4 lorsque la force électromotrice induite dans chaque phase du stator par la décharge du condensateur 2 est sinusoïdale ou ne comporte pas d'harmonique de rang 3 ou d'harmonique de rang multiple de 3.

L'invention peut néanmoins également être appliquée avec des machines électriques tournantes présentant une force électromotrice comprenant des harmoniques de rang 3 ou de rang multiple de 3 dans le cas d'une alimentation du stator en courant homopolaire, dès lors que le couple du moteur généré par le courant homopolaire est faible

La résistance de l'enroulement électrique de stator 4 permet lors de la mise en œuvre du procédé ci-dessus la dissipation de tout ou partie de la charge initiale du condensateur 2.

Par exemple, lorsque le condensateur 2 présente une charge initiale de 0.4 C, au moment où le connecteur 24 est débranché du poste de charge 25 une fois l'unité de stockage d'énergie électrique 30 chargée. Le procédé selon l'invention peut, par exemple en 5 secondes, permettre d'abaisser la charge du condensateur 2 à environ 50µC ou d'abaisser la tension aux bornes du condensateur 2 à environ 60 V.

Selon un autre exemple, les valeurs ci-dessus de charge ou de tension peuvent être obtenues en une seconde à partir d'un même état initial du condensateur 2. L'invention n'est pas limitée aux exemples qui viennent d'être décrits.

L'expression « comportant un » doit être comprise comme signifiant « comportant au moins un », sauf lorsque le contraire est spécifié.

**Revendications**

1. Procédé de décharge d'au moins un condensateur (2) d'un circuit électrique (1), le circuit électrique (1) comprenant en outre :

   - un enroulement électrique de stator (4) de machine électrique tournante polyphasée, ledit enroulement (4) comprenant une pluralité de bobines (6) formant chacune une phase du stator, lesdites bobines (6) n'étant électriquement pas couplées entre elles,
   - un système de commutation (5) comprenant une pluralité de cellules de commutation commandables (10),

   procédé dans lequel on alimente électriquement les bobines (6) par le condensateur (2) à travers le système de commutation (5) dont les cellules de commutation (10) sont commandées de manière à ce que l'enroulement électrique de stator (4) soit parcouru par le courant homopolaire.

2. Procédé selon la revendication 1, les bobines (6) du circuit électrique (2) n'étant ni couplées en étoile, ni couplées en polygonal.

3. Procédé selon l'une des revendications précédentes, le stator étant triphasé.

4. Procédé selon l'une quelconque des revendications précédentes, les cellules de commutation (10) étant commandées de manière à ce que la valeur moyenne sur la période de commutation des cellules de commutation (10) de la somme des courants alimentant l'une des bobines (6) de l'enroulement électrique (4) soit égale à une valeur prédéfinie non nulle.

5. Procédé selon l'une quelconque des revendications précédentes, le système de commutation (5) comprenant une pluralité de bras (8) montés en parallèle, chaque bras (8) comprenant deux cellules de commutation commandables (10) séparées par un point milieu (16), chaque bobine (6) étant disposée entre les points milieux (16) de deux bras (8) dédiés à ladite bobine (6) et le condensateur (2) étant monté en parallèle desdits bras (8).

6. Procédé selon l'une quelconque des revendications précédentes, le circuit (2) comportant en outre une unité de stockage d'énergie électrique (30), le condensateur (2) étant monté entre l'unité de stockage d'énergie électrique (30) et le système de commutation (5).

7. Procédé selon l'une quelconque des revendications précédentes, le circuit (2) comprenant en outre un connecteur (23) apte à être branché à un connecteur de type complémentaire d'un réseau électrique (24) pour charger l'unité de stockage d'énergie électrique (30), le connecteur (23) comprenant au moins une pluralité de contacts (32) ayant chacun une extrémité libre et une autre extrémité reliée à un point intermédiaire (35) d'une bobine (6).

8. Procédé selon la revendication 7, le réseau électrique (24) délivrant l'une quelconque d'une grandeur électrique d'alimentation alternative et d'une grandeur électrique d'alimentation continue.

9. Procédé selon l'une quelconque des revendications précédentes, le circuit (2) comprenant un convertisseur de tension continu/continu (41) interposé entre le condensateur (2) et l'unité de stockage d'énergie électrique (30).

10. Procédé selon l'une quelconque des revendications précédentes, le circuit étant embarqué sur un véhicule électrique ou hybride.

11. Procédé selon l'une quelconque des revendications précédentes, le condensateur (2) étant électriquement connecté à l'enroulement électrique de stator (4) uniquement par l'intermédiaire du système de commutation (5).

12. Procédé selon l'une quelconque des revendications précédentes, lors de la décharge, le courant issu du condensateur (2) circulant dans le système de commutation (5) et dans l'enroulement électrique de stator (4) sans parcourir un composant électrique autre que des conducteurs électriques.

**Patentansprüche**

1. Entladungsverfahren wenigstens eines Kondensators (2) einer elektrischen Schaltung (1), wobei die elektrische Schaltung (1) darüber hinaus umfasst:

- eine elektrische Statorwicklung (4) einer sich drehenden Polyphasen-Maschine, wobei die genannte Wicklung (4) eine Vielzahl von Spulen (6) umfasst, von denen jede eine Phase des Stators bildet, wobei die genannten Spulen (6) elektrisch nicht miteinander gekoppelt sind;
- ein Schaltsystem (5), umfassend eine Vielzahl von steuerbaren Schaltzellen (10)

wobei bei dem Verfahren die Spulen (6) elektrisch durch den Kondensator (2) durch das Schaltsystem (5) versorgt werden, deren Schaltzellen (10) derart gesteuert werden, dass die elektrische Statorwicklung (4) von dem Gleichpolstrom durchquert wird.

2. Verfahren gemäß Anspruch 1, wobei die Spulen (6) der elektrischen Schaltung (2) weder in Sternschaltung noch in Polygonalschaltung gekoppelt werden.

3. Verfahren gemäß einem der voranstehenden Ansprüche, wobei der Stator dreiphasig ist.

4. Verfahren gemäß irgendeinem der voranstehenden Ansprüche, wobei die Schaltzellen (10) derart geschaltet sind, dass der durchschnittliche Wert über die Schaltperiode der Schaltzellen (10) der Summe der Ströme, die eine der Spulen (6) der elektrischen Wicklung (4) versorgen, gleich einem vordefinierten Wert ungleich Null ist.

5. Verfahren gemäß irgendeinem der voranstehenden Ansprüche, wobei das Schaltsystem (5) eine Vielzahl von Amen (8) umfasst, die parallel montiert sind, wobei jeder Arm (8) zwei steuerbare Schaltzellen (10) umfasst, die von einem Mittelpunkt (16) getrennt werden, wobei jede Spule (6) zwischen den Mittelpunkten (16) von zwei Armen (8) getrennt werden, die der genannten Spule (6) dediziert werden, und wobei der Kondensator (2) parallel zu den genannten Armen (8) montiert wird.

6. Verfahren gemäß irgendeinem der voranstehenden Ansprüche, wobei die Schaltung (2) darüber hinaus eine Speichereinheit elektrischer Energie (30) umfasst, wobei der Kondensator (2) zwischen der Speichereinheit elektrischer Energie (30) und dem Schaltsystem (5) montiert ist.

7. Verfahren gemäß irgendeinem der voranstehenden Ansprüche, wobei die Schaltung (2) darüber hinaus einen Verbinder (23) umfasst, der geeignet ist, an einen Verbinder vom komplementären Typ eines Stromnetzes (24) angeschlossen zu werden, um die Speichereinheit elektrischer Energie (30) zu beladen, wobei der Verbinder (23) wenigstens eine Vielzahl von Kontakten (32) umfasst, die jeder ein freies Ende und ein anderes Ende aufweisen, das mit einem Zwischenpunkt (35) einer Spule (6) verbunden ist.

8. Vorrichtung gemäß Anspruch 7, wobei das Stromnetz (24) irgendeine Wechselstrom-Versorgung und eine elektrische Gleichstrom-Versorgung ausgibt.

9. Verfahren gemäß irgendeinem der voranstehenden Ansprüche, wobei die Schaltung (2) einen Spannungswandler Gleichstrom / Gleichstrom (41) umfasst, der zwischen dem Kondensator (2) und der Speichereinheit elektrischer Energie (30) zwischengeschaltet ist.

10. Verfahren gemäß irgendeinem der voranstehenden Ansprüche, wobei die Schaltung in einem Elektro- oder Hybrid-Fahrzeug eingebaut wird.

11. Verfahren gemäß irgendeinem der voranstehenden Ansprüche, wobei der Kondensator (2) elektrisch an die elektrische Statorwicklung (4) nur mittels des Schaltsystems (5) angeschlossen ist.

12. Verfahren gemäß irgendeinem der voranstehenden Ansprüche, wobei der Strom, der aus dem Kondensator (2) stammt, beim Entladen in dem Schaltsystem (5) und in der elektrischen Statorwicklung (4) fließt, ohne ein anderes elektrische Bauteil zu durchqueren als elektrische Leiter.

## Claims

1. Method for discharging at least one capacitor (2) of an electrical circuit (1), the electrical circuit (1) further comprising:

- a stator electrical winding (4) of a polyphase rotary electrical machine, said winding (4) comprising a plurality of coils (6) each one forming a stator phase, said coils (6) not being electrically coupled together,
- a switching system (5) comprising a plurality of controllable switching cells (10),

method in which the coils (6) are electrically powered by the capacitor (2) by means of the switching system (5) of which the switching cells (10) are controlled in such a way that the stator electrical winding (4) is traversed by the homopolar electrical current.

2. Method according to claim 1, the coils (6) of the electrical circuit (2) being neither star-coupled, nor polygonal-coupled.

3. Method according to one of the preceding claims, the stator being three-phase.

**4.** Method according to any preceding claim, the switching cells (10) being controlled in such a way that the average value over the switching period of the switching cells (10) of the sum of the currents powering one of the coils (6) of the electrical winding (4) is equal to a non-zero predefined value.

**5.** Method according to any preceding claim, the switching system (5) comprising a plurality of arms (8) mounted in parallel, with each arm (8) comprising two controllable switching cells (10) separated by a centre tap (16), with each coil (6) being disposed between the centre taps (16) of two arms (8) dedicated to said coil (6) and the capacitor (2) being mounted in parallel of said arms (8).

**6.** Method according to any preceding claim, the circuit (2) further comprising an electrical energy storage unit (30), the capacitor (2) being mounted between the electrical energy storage unit (30) and the switching system (5).

**7.** Method according to any preceding claim, the circuit (2) further comprising a connector (23) able to be connected to a connector of the additional type of an electrical network (24) in order to charge the electrical energy storage unit (30), the connector (23) comprising at least one plurality of contacts (32) with each one having a free end and another end connected to an intermediate tap (35) of a coil (6).

**8.** Method according to claim 7, the electrical network (24) delivering any one of an alternating electrical power supply and of a direct electrical power supply.

**9.** Method according to any preceding claim, the circuit (2) comprising a DC/DC voltage converter (41) inserted between the capacitor (2) and the electrical energy storage unit (30).

**10.** Method according to any preceding claim, the circuit being on board an electric or hybrid vehicle.

**11.** Method according to any preceding claim, the capacitor (2) being electrically connected to the stator electrical winding (4) solely by the intermediary of the switching system (5).

**12.** Method according to any preceding claim, during the discharging, with the current coming from the capacitor (2) flowing in the switching system (5) and in the stator electrical winding (4) without passing through an electrical component other than the electrical conductors.

Fig.2

Fig.1

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110050136 A